# EUROPÄISCHE PATENTSCHRIFT

(11) **EP 1 631 751 B1**
(45) Veröffentlichungstag und Bekanntmachung des Hinweises auf die Patenterteilung: **11.03.2009**
(21) Anmeldenummer: 04729363.4
(22) Anmeldetag: 24.04.2004
(51) Int. Cl.: F16D 65/54

(54) **VERSCHLEISSNACHSTELLEINRICHTUNG EINES ANTRIEBS FÜR MOBIL-FAHRZEUGE**
WEAR-ADJUSTING DEVICE FOR A DRIVE OF A MOBILE VEHICLE
DISPOSITIF D'AJUSTEMENT D'USURE POUR TRANSMISSIONS DE VEHICULES MOBILES

(30) Priorität: 06.06.2003 DE 10326139
(43) Veröffentlichungstag der Anmeldung: 08.03.2006
(73) Patentinhaber: ZF Friedrichshafen AG, 88038 Friedrichshafen (DE)
(72) Erfinder: OBERSTARR, Johann, Gerhard, 94032 Passau (DE)
(86) Internationale Anmeldenummer: PCT/EP2004/004354
(87) Internationale Veröffentlichungsnummer: WO 2004/109142

(56) Entgegenhaltungen:
- EP-A- 1 134 449
- DE-A- 10 058 042

## Beschreibung

Die Erfindung bezieht sich auf Antriebe für Mobil-Fahrzeuge nach der im Oberbegriff von Anspruch 1 näher definierten Art.

Gattungsgemäße Antriebe werden insbesondere für Mobil-Fahrzeuge, wie beispielsweise Arbeitsmaschinen, wie Radbagger oder Radlader, verwendet, um die Fahrzeugräder anzutreiben oder abzubremsen. Insbesondere ist es wichtig, die in diesen Antrieben vorhandene Bremse mit gleichbleibender Funktion betreiben zu können.

Die US 6,090,006 offenbart einen Antrieb für Mobil-Fahrzeuge mit einem Planetengetriebe, bei welchem am radial äußeren Bereich des Planetenträgers die drehenden inneren Lamellen einer Lamellenbremse angeordnet sind, wodurch bei im Schließsinne betätigter Lamellenbremse der Planetenträger mit dem Gehäuse drehfest verbunden wird. Um ein gleichbleibendes Lüftspiel der Lamellen zu gewährleisten, weist die Betätigungseinrichtung der Lamellenbremse eine automatische Kolben-Nachstellvorrichtung auf. Hierzu sind im Gehäuse Sacklochbohrungen angeordnet, in welche Klemmelemente eingreifen, welche beim Betätigen der Bremse so verschoben werden, dass bei im Öffnungssinne betätigter Lamellenbremse das Kupplungsspiel gleichbleibt. Diese Art von Nachstellvorrichtung benötigt eine aufwendige Bearbeitung des Gehäuses und die Federelemente werden stark belastet.

Das dokument EP 1 134 449 offenbart einen Antrieb für Mobil-Fahrzeuge gemäß dem Oberbegriff des Anspruchs 1.

Der vorliegenden Erfindung liegt die Aufgabe zugrunde, einen Antrieb für Mobil-Fahrzeuge zu schaffen, welcher sich durch eine gleichbleibende Funktion der Bremse auszeichnet.

Die Aufgabe wird mit einem, auch die kennzeichnenden Merkmale des Hauptanspruchs aufweisenden, gattungsgemäßen Antrieb für Mobil-Fahrzeuge gelöst.

Erfindungsgemäß weist der Antrieb ein Planetengetriebe auf, dessen drehbares Teil bei im Schließsinne betätigter Lamellenbremse drehfest mit dem Gehäuse verbunden ist. Um bei im Öffnungssinne betätigter Lamellenbremse das Lüftspiel der Lamellen auch bei steigendem Verschleiß der Lamellen gleich zu halten, ist im Kolben eine automatische Nachstellvorrichtung angeordnet. Hierzu weist der Kolben mindestens eine Bohrung auf, in welcher mindestens ein Klemmelement, in Form einer Klemmhülse, angeordnet ist, welches sich auf einer Scheibe abstützt. Die Scheibe ist innerhalb zweier Anschläge axial beweglich und in radialer Richtung frei drehbar. Vorzugsweise liegen die Klemmelemente ausschließlich auf der Scheibe auf, wodurch die Klemmelemente keinerlei in Umfangsrichtung wirkenden Zusatzkräfte erfahren, so dass es möglich ist, einen Ringkolben,zur Betätigung der Lamellenbremse zu verwenden, welcher nicht gegen Verdrehen im Gehäuse gesichert werden muß. Indem keine Zusatzkräfte auf die Klemmelemente wirken, welche beispielsweise durch das Verdrehen des Kolbens entstehen könnten, ist eine gleichbleibende Funktion der automatischen Nachstellvorrichtung gewährleistet. Auf die Scheibe, auf welcher die Klemmelemente aufliegen, wirkt eine Federkraft einer Rückstellfeder, welche den Kolben bei im Öffnungssinne betätigter Lamellenbremse zurückdrückt. Dies ist jedoch nur so weit möglich, bis die Scheibe an ihrem einen Anschlag anliegt. Wird der Kolben im Schließsinne betätigt, so bewegt sich der Kolben in axialer Richtung, wodurch sich die in ihm angeordneten Klemmelemente ebenfalls in axialer Richtung bewegen und die Scheibe gegen die Federkraft verschieben. Dies ist nur innerhalb der beiden Anschläge der Scheibe möglich, so dass bei Erreichen des anderen Anschlags der Scheibe der Kolben sich zwar weiter in Schließrichtung der Lamellenbremse bewegt, jedoch das Klemmelement sich auf der Scheibe, welche sich an ihrem Anschlag befindet, abstützt und im Kolben gleitet. Bei erneuter, im Öffnungssinne betätigter Lamellenbremse wird der Kolben wiederum nur innerhalb des Anschlags der Scheibe durch die Federkraft der Rückstellfeder zurückbewegt, wodurch der Abstand der Lamellen gleichbleibt. Indem die automatische Nachstellvorrichtung am inneren Bereich des Kolbens angeordnet ist, wird eine kostengünstige, aus wenigen einfachen Bauteilen bestehende, montagefreundliche, automatische Nachstellvorrichtung geschaffen. Indem der Kolben in radialer Verdrehrichtung nicht über die Nachstellvorrichtung mit dem Gehäuse verbunden ist, ist es nicht notwendig, aufwendige Teile zur Aufnahme von Umfangskräften vorzusehen.

Weitere Merkmale sind der Figuren-Beschreibung zu entnehmen.

Es zeigen:

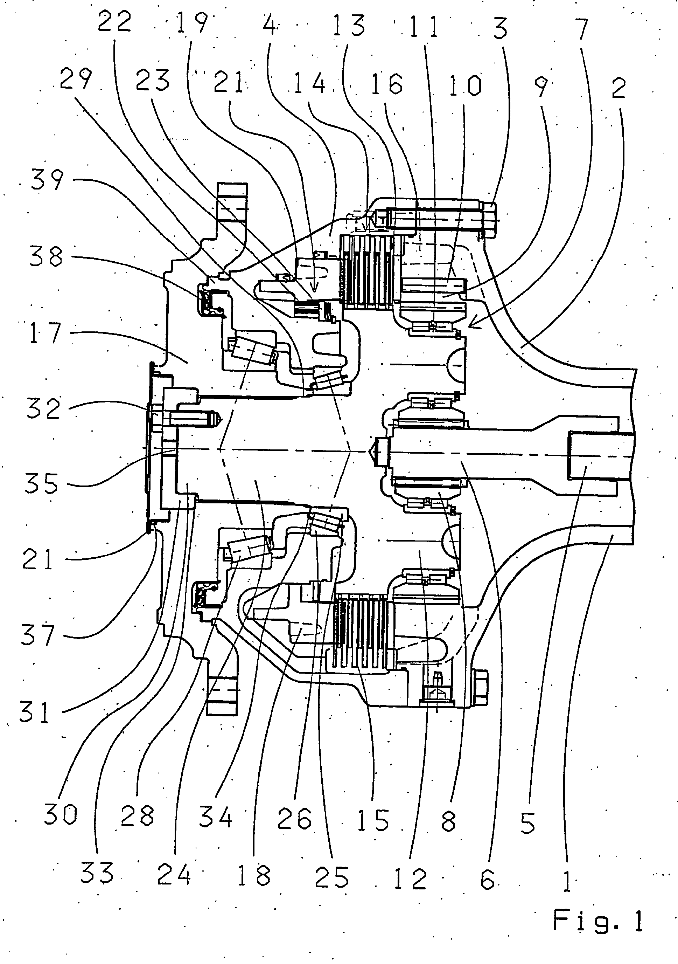

- Fig. 1: einen Antrieb für Mobil-Fahrzeuge mit einer automatischen Nachstellvorrichtung und

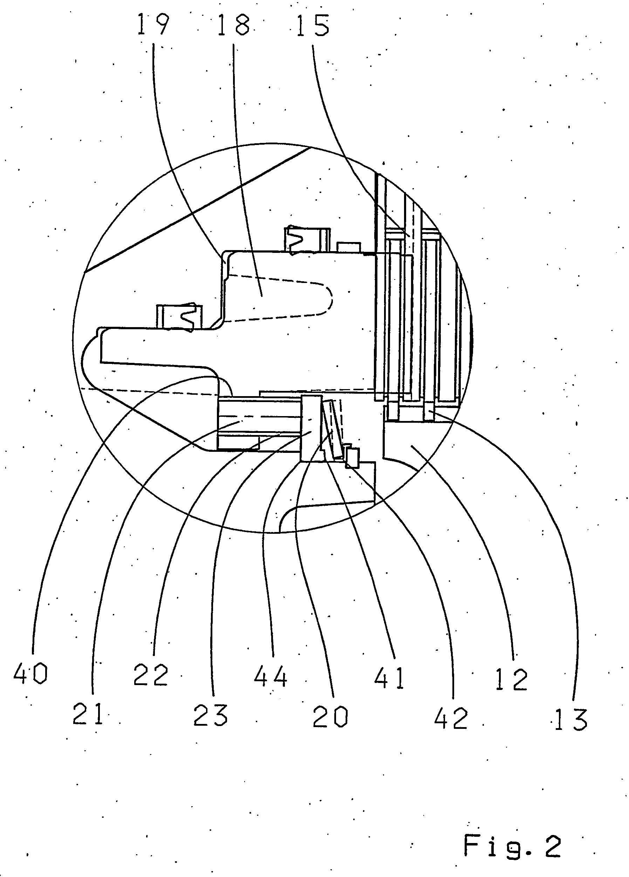

- Fig. 2: die detaillierte Beschreibung der automati- schen Nachstellvorrichtung.

### Fig. 1:

Diese zeigt einen Ausschnitt einer Seite der Antriebsachse mit einem Achsrohr 1, welches mit dem nicht gezeigten Fahrzeug verbindbar ist und welches eine trichterförmige Erweiterung 2 aufweist, welche über Verbindungselemente 3 mit dem Gehäuse 4 verbunden ist. Eine Antriebswelle 5 treibt ein inneres Zentralrad 6 eines Planetengetriebes 7 an und kann auch einstückig mit der Antriebswelle ausgeführt sein. Vorzugsweise ist die Antriebswelle mit einem nicht gezeigten Differential verbunden. Es besteht jedoch auch die Möglichkeit, die Antriebswelle mit einem Antriebsmotor, wie beispielsweise einem Elektromotor oder einem Hydromotor, zu verbinden. Das innere Zentralrad 6 ist mit dem Planetenrad 8 in Wirkverbindung, wobei sich das Planetenrad 8 am äußeren Zentralrad 9, welches drehfest gehalten ist, abstützt. Vorzugsweise ist das äußere Zentralrad 9 mittels Bolzen 10 drehfest in der trichterförmigen Erweiterung 2 oder dem Gehäuse 4 angeordnet. Es besteht jedoch auch die Möglichkeit, das äußere Zentralrad 9 über eine selbstschneidende Verzahnung, eine sogenannte "Maus-Verzahnung", drehfest in der trichterförmigen Erweiterung 2 oder dem Gehäuse 4 zu halten. Das Planetenrad 8 ist über die Planetenlagerung 11 auf dem Planetenträger 12 gelagert. An dem radial äußeren Bereich des Planetenträgers 12, benachbart zum Planetenrad 8, sind die inneren drehenden Lamellen 13 der Lamellenbremse 14 drehfest angeordnet. Die äußeren Lamellen 15 sind drehfest im Gehäuse 4 oder der trichterförmigen Erweiterung 2 angeordnet. Indem die inneren Lamellen 13 drehen, erfolgt durch die Zentrifugalbeschleunigung des Schmiermittels eine Kühlung der Bremse 14, indem Schmiermittel am äußeren Bereich des Planetenträgers 12 bei den inneren Lamellen 13 eintritt, die Lamellenbremse durchflutet und in dem Bereich, in dem die äußeren Lamellen 15 drehfest gehalten sind, wieder aus der Lamellenbremse 14 in axialer Richtung austritt und über Kanäle 16 zurückfließen kann. Vorzugsweise ist die Lamellenbremse 14 zwischen dem Planetenrad 8 und dem Abtriebsflansch 17 angeordnet. Zwischen der Lamellenbremse 14 und dem Abtriebsflansch 17 ist ein Kolben 18 angeordnet, welcher bei Druckbeaufschlagung im Raum 19 die Lamellenbremse 14 im Schließsinne betätigt. Der Kolben 18 wird von einer Rückstellfeder 20 bei Nichtbetätigen zurückgedrückt. Hierbei besteht die Möglichkeit, die Rückstellfeder 20 auf eine automatische Nachstellvorrichtung 21 wirken zu lassen, welche im radial inneren Bereich des Kolbens 18 angeordnet ist. Bei dieser Nachstellvorrichtung ist eine Klemmhülse 22 im Kolben 18 angeordnet, welche auf eine Scheibe 23 wirkt, welche innerhalb eines definierten Weges axial verschiebbar und durch beidseitige Anschläge der axiale Weg begrenzt ist. Da die automatische Nachstellvorrichtung 21 in radialer Richtung nicht fixiert ist, ist es auch nicht notwendig, den Kolben 18 in radialer Richtung zu fixieren. Vorzugsweise befindet sich der Kolben 18 und die Nachstellvorrichtung im Bereich des ersten und zweiten Lagers. Der Planetenträger 12 weist in Richtung des Abtriebsflansches 17 eine Zapfen 24 auf, auf dessen Oberfläche der Innenring 25 der zweiten Lagerung 26 angeordnet ist. Der Zapfen 24 ist über eine drehfeste Verbindung 27, beispielsweise eine Verzahnung oder eine mäanderförmige Ausgestaltung der Oberfläche oder mehrere Bolzen, mit dem Abtriebsflansch 17 drehfest verbunden. Diese drehfeste Verbindung 27 ist in einer Bohrung des Abtriebsflansches 17 angeordnet. Indem die drehfeste Verbindung 27 in der Bohrung des Abtriebsflansches 17 angeordnet ist, kann deren Länge, je nach Anforderung, optimal ausgelegt werden. Der Abtriebsflansch 17 ist über eine erste Lagerung 28 im Gehäuse 4 gelagert. Vorzugsweise ist die erste Lagerung 28 in ihrem Innendurchmesser größer als die zweite Lagerung 26 ausgestaltet. Unmittelbar benachbart zum Innenring 25 ist eine Zentrierung 29 angeordnet. Über diese Zentrierung 29 wird der Abtriebsflansch 17 auf dem Zapfen 24 zentriert. An der dem Planetenrad 8 abgewandten Ende 30 des Zapfens 24 befindet sich eine Buchse 31, welche den Abtriebsflansch 17 auf dem Zapfen 24 zentriert. Somit wird der Abtriebsflansch 17 über die Buchse 31 und die Zentrierung 29 auf dem Zapfen 24 zentriert, wodurch die erste Lagerung 28 und die zweite Lagerung 26 optimale Betriebsbedingungen erfahren, da der Abtriebsflansch 17 nicht gegen den Planetenträger 12 abkippen kann. Die Buchse 31 ist topfförmig ausgebildet und wird über Verbindungselemente 32 in Richtung des Zapfens 24 verspannt, wobei die Buchse 31 über ihre axiale Anlage 33 den Abtriebsflansch 17 auf den Innenring 25 drückt. Indem der Innenring 25 einerseits im Planetenträger 12 und andererseits an der axialen Anlage 34 des Abtriebsflansches 17 anliegt, ist eine einfache Montage ohne aufwendige Einstellungsarbeiten der ersten Lagerung 28 und der zweiten Lagerung 26 möglich. Es können somit sogenannte "Set-Right-Lagerungen" verwendet werden. Indem die Buchse 31 und die Verbindungselemente 32 auf einfache Weise von außen im Fahrzeug zugänglich sind, kann der Abtriebsflansch 17 ohne Ausbau der Achse aus dem Fahrzeug demontiert werden. Indem sich auf dem Abtriebsflansch 17 nur das erste Lager 28 befindet, kann der Abtriebsflansch 17 ohne größere Kraftaufwendung demontiert werden. Dies ist möglich, da der Innenring 25 auf dem Planetenträger 12 verbleibt. Die Buchse 31 ist über ein Abdrückgewinde 35 auf einfache Weise demontierbar. Zum Schutz der Verbindungselemente 32 und zur einfacheren Abdichtung ist der Abtriebsflansch 17 über einen Deckel 36 mit einer Dichtung 37 verschlossen. Der Abtriebsflansch 17 ist über einen Radialwellendichtring 38, eine sogenannte "Kassettendichtung", gegenüber dem Gehäuse 4 abgedichtet. Damit die Dichtung 38 vor Verschmutzung geschützt ist, sind der Abtriebsflansch 17 und das Gehäuse 4 so ausgestaltet, dass ein Labyrinth 39 entsteht.

### Fig. 2:

Am radial inneren Bereich des Kolbens 18 ist mindestens eine Bohrung 40 angeordnet, in welcher sich die Klemmhülse 22 befindet. Vorzugsweise sind mehrere gleichmäßig verteilte Bohrungen 40 und Klemmhülsen 22 vorhanden. Bei der Bohrung 40 kann es sich um eine Sacklochbohrung, vorzugsweise jedoch um eine Durchgangsbohrung, handeln. Wird der Kolben 18 durch Druckbeaufschlagung des Raums 19 in Schließrichtung der Bremse 14 bewegt, so wird ebenfalls die Klemmhülse 22 in Bewegungsrichtung des Kolbens mitbewegt. Die Klemmhülse 22 stützt sich auf der Scheibe 23 ab, ist jedoch vorzugsweise mit ihr nicht verbunden, um keine Zusatzkräfte in Umfangsrichtung abstützen zu müssen. Durch die Bewegung des Kolbens 18 und der Klemmhülse 22 wird die Scheibe 23 ebenfalls gegen die Federkraft der Feder 20 verschoben, bis die Scheibe 23 mit ihrem Anschlag 41 anliegt. Vorzugsweise ist die Feder 20 über ein Anschlagprofil 42 in axialer Richtung auf einem Sicherungsring 43 fixiert. In der dargestellten Ausführungsform bewegt sich die Scheibe 23, bis der Anschlag 41 an der Feder 20 anliegt. Es besteht jedoch auch die Möglichkeit, andere konstruktive Anschläge zu verwenden. Liegt die Scheibe 23 mit ihrem Anschlag 41 an der Feder 20 an, der Kolben 18 hat jedoch die Lamellenbremse 14 noch nicht vollständig zusammengedrückt, so bewegt sich der Kolben 18 bis zum vollständigen Schließen der Lamellenbremse 14 weiter, wodurch die Klemmhülse 22 in der Bohrung 40 gleitet. Wird aus dem Zustand der vollständig geschlossenen Lamellenbremse der Druck im Raum 19 reduziert, so beginnt unterhalb eines definierten Drucks die Federkraft der Feder 20, die Scheibe 23 und somit die Klemmhülse 22 und den Kolben 18 im Öffnungssinne zu bewegen. Der Kolben 18 wird nur so weit bewegt, bis die Scheibe 23 an ihrem Anschlag 44 anliegt. Somit ist gewährleistet, dass das Spiel der Lamellen 13 und 15 in jedem Verschleißzustand der Lamellenbremse 14 gleichbleibt.

### Bezugszeichen

- 1: Achsrohr
- 2: trichterförmige Erweiterung
- 3: Verbindungselemente
- 4: Gehäuse
- 5: Antriebswelle
- 6: inneres Zentralrad
- 7: Planetengetriebe
- 8: Planetenrad
- 9: äußeres Zentralrad
- 10: Bolzen
- 11: Lagerung
- 12: Planetenträger
- 13: innere Lamellen
- 14: Lamellenbremse
- 15: äußere Lamellen
- 16: Kanäle
- 17: Abtriebsflansch
- 18: Kolben
- 19: Raum
- 20: Rückstellfeder
- 21: automatische Nachstellvorrichtung
- 22: Klemmhülse
- 23: Scheibe
- 24: Zapfen
- 25: Innenring
- 26: zweite Lagerung
- 27: drehfeste Verbindung
- 28: erste Lagerung
- 29: Zentrierung
- 30: Ende
- 31: Buchse
- 32: Verbindungselement
- 33: axiale Anlage
- 34: axiale Anlage
- 35: Abdrückgewinde
- 36: Deckel
- 37: Dichtung
- 38: Dichtung
- 39: Labyrinth
- 40: Bohrung
- 41: Anschlag
- 42: Anschlagprofil
- 43: Sicherungsring
- 44: Anschlag

## Patentansprüche

1. Antrieb für Mobil-Fahrzeuge mit einem Planetengetriebe (7), bei welchem über eine Lamellenbremse (14) ein drehbares Teil des Planetengetriebes (12) mit einem drehfesten Gehäuse (4) verbindbar ist, wobei die Lamellenbremse (14) in Schließrichtung aktivierbar ist, indem ein Kolben in axialer Richtung gegen eine Federkraft einer Feder (20) verschoben wird, mit einer automatischen Nachstellvorrichtung, welcher den Kolbenweg bei im Öffnungssinne betätigter Lamellenbremse ((14) begrenzt, **dadurch gekennzeichnet, dass** die automatische Nachstellvorrichtung mindestens ein Klemmelement (22) in Form einer Klemmhülse aufweist, welches in einer Bohrung (40) des Kolbens (18) angeordnet ist und die Axialkraft des Klemmelements (22) an eine Scheibe (23) überträgt, welche innerhalb eines ersten und eines zweiten Anschlages um einen definierten Weg verschiebbar ist.

2. Antrieb für ein Mobil-Fahrzeug nach Anspruch 1, **dadurch gekennzeichnet, dass** die Klemmelemente (22) an der Scheibe anliegen.

3. Antrieb für ein Mobil-Fahrzeug nach Anspruch 1, **dadurch gekennzeichnet, dass** die Feder (20) über die Scheibe (23) auf den Kolben (18) wirkt.

4. Antrieb für ein Mobil-Fahrzeug nach Anspruch 2, **dadurch gekennzeichnet, dass** die Federkraft der Feder (20) kleiner ist als die Klemmkraft der Klemmelemente (22).

5. Antrieb für ein Mobil-Fahrzeug nach Anspruch 1, **dadurch gekennzeichnet, dass** die Scheibe (23) in radialer Richtung drehbar ist.

6. Antrieb für ein Mobil-Fahrzeug nach Anspruch 1, **dadurch gekennzeichnet, dass** die Nachstellvorrichtung am radial inneren Bereich des Kolbens (18) angeordnet ist.

7. Antrieb für ein Mobil-Fahrzeug nach Anspruch 1, **dadurch gekennzeichnet, dass** die Nachstellvorrichtung zwischen einem Beaufschlagungsraum (19) und einer Radlagerung (11) angeordnet ist.

8. Antrieb für ein Mobil-Fahrzeug nach Anspruch 1, **dadurch gekennzeichnet, dass** die Lamellenbremse (14) am radial äußeren Bereich des Planetenträgers (12) angeordnet ist.

9. Antrieb für ein Mobil-Fahrzeug nach Anspruch 1, **dadurch gekennzeichnet, dass** ein Planetenträger (12) den Abtrieb bildet.

10. Antrieb für ein Mobil-Fahrzeug nach Anspruch 1, **dadurch gekennzeichnet, dass** die automatische Nachstellvorrichtung im axialen Bereich der Radlagerung und einer drehfesten Verbindung von einem Abtriebsflansch (17) und einem Planetenträger (12) angeordnet ist.

11. Antrieb für ein Mobil-Fahrzeug nach Anspruch 1, **dadurch gekennzeichnet, dass** der Kolben (18) ein Ringkolben ist.

## Claims

1. Drive for a vehicle with a planetary transmission (7), with a swiveling part (12) of the planetary transmission being linkable to a rigid housing (4) via a multidisk brake (14), with the multidisk brake (14) being activatable in locking direction by means of a piston being being displaced in axial direction against the force of a spring (20), with an automatic adjusting device limiting piston travel when the multidisk brake is activated for opening (14), **characterized in that** the automatic adjusting device features at least one clamping element (22) in the form of a clamping sleeve arranged in a bore (40) of the piston (18) and transmitting the axial force of the clamping element (22) to a disk (23) which is displaceable by a defined travel within a first and a second stop.

2. Drive for a vehicle according to claim 1, **characterized in that** the clamping elements (22) are contiguous to the disk.

3. Drive for a vehicle according to claim 1, **characterized in that** the spring (20) acts on the piston (18) via the disk (23).

4. Drive for a vehicle according to claim 2, **characterized in that** the force of the spring (20) is smaller than the force of the clamping element (22).

5. Drive for a vehicle according to claim 1, **characterized in that** the disk (23) is rotatable in radial direction.

6. Drive for a vehicle according to claim 1, **characterized in that** the the adjusting device is arranged in the radially inner area of the piston (18).

7. Drive for a vehicle according to claim 1, **characterized in that** the adjusting device is arranged between an activation space (19) and a wheel bearing (11).

8. Drive for a vehicle according to claim 1, **characterized in that** the multidisk brake (14) is arranged in the radially outer area of the planet carrier (12).

9. Drive for a vehicle according to claim 1, **characterized in that** a planet carrier (12) constitutes the output.

10. Drive for a vehicle according to claim 1, **characterized in that** the automatic adjusting device is arranged in the axial area of the wheel bearing and a rigid connection of an output flange (17) and a planet carrier (12).

11. Drive for a vehicle according to claim 1, **characterized in that** the piston (18) is an annular piston.

## Revendications

1. Entraînement pour véhicules mobiles doté d'une boîte planétaire (7), dans laquelle il est possible de relier par l'intermédiaire d'un frein multidisque (14) une pièce rotative de la boîte planétaire (12) à un carter fixe en rotation (4), sachant que le frein multidisque (14) peut être activé en direction de fermeture, en déplaçant un piston dans le sens axial contre une force d'un ressort (20), et cela à l'aide d'un dispositif de rattrapage automatique, limitant la course du piston lorsque le frein multidisque (14) est actionné dans le sens d'ouverture, **caractérisé en ce que** le dispositif de rattrapage automatique comporte au moins un élément de serrage (22) sous forme d'une douille de serrage, celui-ci étant disposé dans un alésage (40) du piston (18) et transmettant la force axiale de l'élément de serrage (22) à un disque (23), celui-ci pouvant être déplacé d'une course définie dans un espace entre une première et une deuxième butée.

2. Entraînement pour un véhicule mobile selon la revendication 1, **caractérisé en ce que** les éléments de serrage (22) plaquent au disque.

3. Entraînement pour un véhicule mobile selon la revendication 1, **caractérisé en ce que** le ressort (20) agit par l'intermédiaire du disque (23) sur le piston (18).

4. Entraînement pour un véhicule mobile selon la revendication 2, **caractérisé en ce que** la force du ressort (20) est inférieure à la force de serrage des éléments de serrage (22).

5. Entraînement pour un véhicule mobile selon la revendication 1, **caractérisé en ce que** le disque (23) peut être tourné en sens radial.

6. Entraînement pour un véhicule mobile selon la revendication 1, **caractérisé en ce que** le dispositif de rattrapage est disposé dans la zone radiale intérieure du piston (18).

7. Entraînement pour un véhicule mobile selon la revendication 1, **caractérisé en ce que** le dispositif de rattrapage est disposé entre une chambre de pressurisation (19) et un palier de roue (11).

8. Entraînement pour un véhicule mobile selon la revendication 1, **caractérisé en ce que** le frein multidisque (14) est disposé dans la zone extérieure radiale de l'arbre porte-satellites (12).

9. Entraînement pour un véhicule mobile selon la revendication 1, **caractérisé en ce que** un arbre porte-satellites (12) forme la sortie.

10. Entraînement pour un véhicule mobile selon la revendication 1, **caractérisé en ce que** le dispositif de rattrapage automatique est disposé dans la zone axiale du palier de roue et dans la zone d'une liaison solidaire en rotation d'une bride de sortie (17) et d'un arbre porte-satellites (12).

11. Entraînement pour un véhicule mobile selon la revendication 1, **caractérisé en ce que** le piston (18) est un piston annulaire.
